# EUROPEAN PATENT SPECIFICATION

(11) **EP 0 592 751 B1**
(45) Date of publication and mention of the grant of the patent: **23.04.1997**
(21) Application number: 92830566.3
(22) Date of filing: 13.10.1992
(51) Int. Cl.: B60R 25/00

(54) **Antitheft gear lever lock for cars**
Verriegelungsvorrichtung für den Schalthebel eines Kraftfahrzeugs
Dispositif de verrouillage de sélecteur de vitesses d'un véhicule automobile

(43) Date of publication of application: 20.04.1994
(73) Proprietor: Jonas, Elia, 00152 Roma (IT)
(72) Inventor: Jonas, Elia, 00152 Roma (IT)
(74) Representative: Sarpi, Maurizio

(56) References cited:
- EP-A- 0 489 265
- FR-A- 2 552 040
- US-A- 4 812 152
- LOCKSMITH LEDGER INTERNATIONAL vol. 50, no. 11, September 1990, PARK RIDGE, US pages 16 - 17
- DATABASE WPI Derwent Publications Ltd., London, GB; AN 80-85006 & JP-A-55 131 160 (MITSUBISHI STEEL)12 October 1980

## Description

The present invention relates to an antitheft gear lever lock for cars in the form of a bracket locking the gear lever to the floor of the car.

Antitheft devices for cars locking mechanically the gear lever are known. They essentially consist of a padlock closure mechanism with a body which is rigidly connected to one end of a bracket, the other end of which is bolted to the floor of the car, and with a bend supported by such body which can be snap-locked to and unlocked from the latter and in the operating position is caused to embrace the gear lever in order to lock it in the reverse gear position in case of cars with manually operated gear shift and in the park position in case of cars with automatic gearshift.
EP-A-489265 describes an antitheft gear lever lock for cars, comprising a bracket of retrofittable construction formed with an end section provided with through-holes for fastening bolts and being able to be subjected to one or more bendings, said bracket having further an elongated intermediate section provided with one or more bendings approaching the gear lever and having a head section provided with holes for the connection to the antitheft padlock closure mechanism which is supported by said bracket and adapted to lock the gear lever by a bend embracing and retaining said gear lever in the operative position.
Such a prior art device is described in the preamble of independent claim 1.
Furthermore, from JP-A-55131160 it is known a cutting resistant manganese steel for making locks.
However, such antitheft devices have some drawbacks. One drawback relates to the locking bracket of the padlock closure mechanism. Such drawback consists in that the brackets used hitherto are not made of a material which is plastic enough to be easily bent by a fitter so that there is no chance to adapt the brackets to any car model and then a particular bracket must be used every time.
A second drawback relates to the body including the padlock closure mechanism which is supported by the bracket when the gear lever lock has to be brought to the rest position. Presently, the body is provided at the upper side with a groove and two tabs standing from said body and parallel to and urged away from each other by a spring. A bend is slidingly inserted into such groove so as to engage said tabs in order to overcome the force of the spring and to reach its rest position. The described operation is very hard to be carried out by the driver.

As far as the first drawback is concerned it was surprisingly found that the manganese steel under solubilized state having a Brinell hardness of approximately 220 kg/mm² has in combination hardness and plasticity such as to provide a bracket which is hard enough to withstand to cutting nippers, saw, picklock or the like burglary tool, and at the same time plastic enough to be easily bent and adapted to any car.
In order to overcome the second drawback, the padlock closure mechanism is provided at the upper side with a mount having two openings adapted to receive the two parallel ends of the locking bend introduced by the driver from above with a suitable angle of inclination. The openings are adjacent to the spring-loaded tabs, the plane of such openings being parallel to the axis of the spring loading the tabs. The bend is introduced in a slanting attitude until its parallel arms abut the spring-loaded tabs from above. The rest position of the bend is then reached by an easy rotation of the same about an axis parallel to that of the spring, thus urging the tabs against the action of such spring, the edge of said openings acting as a bearing in such rotation.

Therefore, an object of the present invention is an antitheft gear lever lock for cars which is characterized in combination by: a bracket forged by manganese steel under solubilized state and having a Brinell hardness of approximately 220 kg/mm², said bracket being sized and formed as well as provided with a set of holes in one end part such as to allow it to be applied to any car by a fitter through an appropriate, easy bending of the bracket which is then bolted to the floor of the car through the most suitable holes; a padlock closure mechanism supported by said bracket and adapted to lock the gear lever by a bend embracing and retaining said lever in the operative position and being able to reach its rest position by an easy rotation movement. The bracket is further characterized in that its part not provided with the set of holes, i.e. that part standing up from the floor, is subjected to a hardening by surface nitrocarburizing.

The present invention will be better understood with reference to the accompanying drawings which show by way of a non-limitative example a preferred embodiment thereof.In the drawings:
Figs. 1a and 1b show a front and a side views of the bracket.
Fig. 2 is a perspective view of the gear lever lock of this invention under operative conditions;
Figs 3a and 3b are two perspective views of the same gear lever lock under rest conditions with the locking bend in a first inclinated position and in the final position.
Fig. 4a and 4b show two embodiments of the gear lever lock mechanism; and
Fig. 5 shows the bend of the gear lever lock.

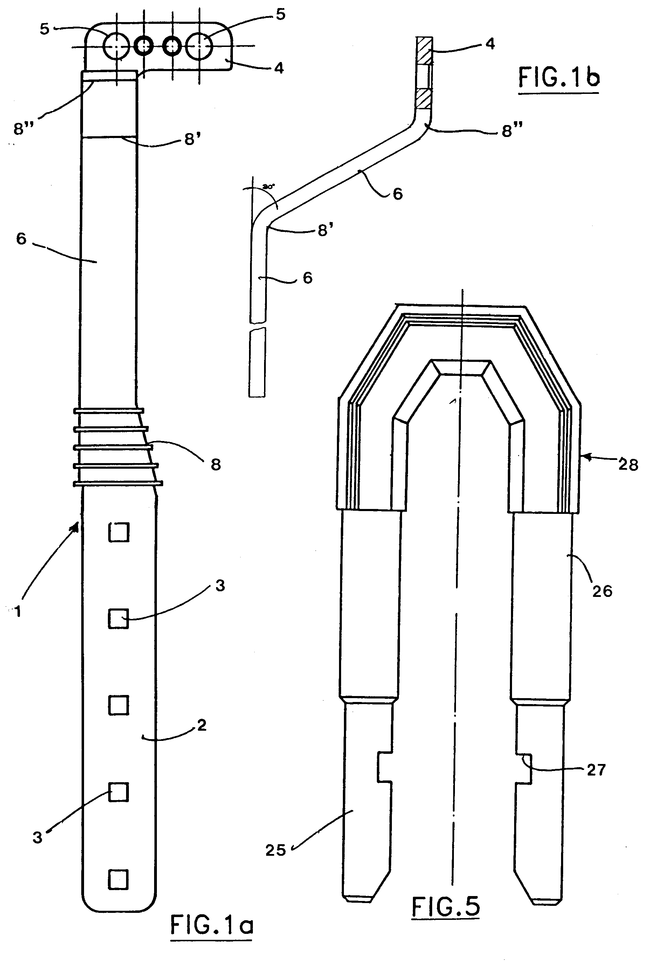

As shown in Figs. 1a and 1b bracket 1 has an end section 2 provided with fixing holes 3 for its bolting to the floor of the car, a head member 4 provided with holes 5 for the connection to the antitheft padlock closure mechanism, and an intermediate member 6, at the end of which the bracket can be bent to be fitted to the car. Both head and intermediate members are subjected to hardening by nitrocarburizing.

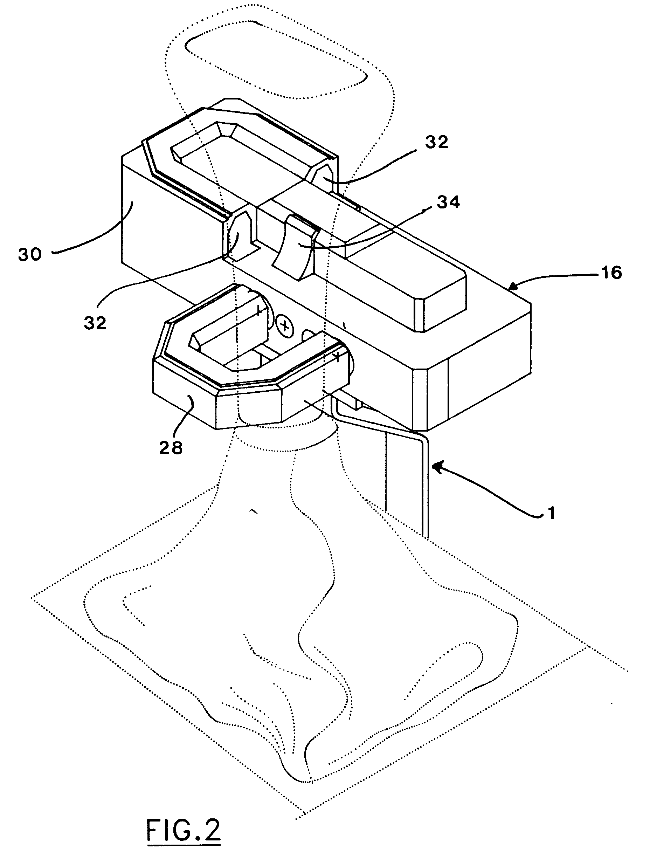

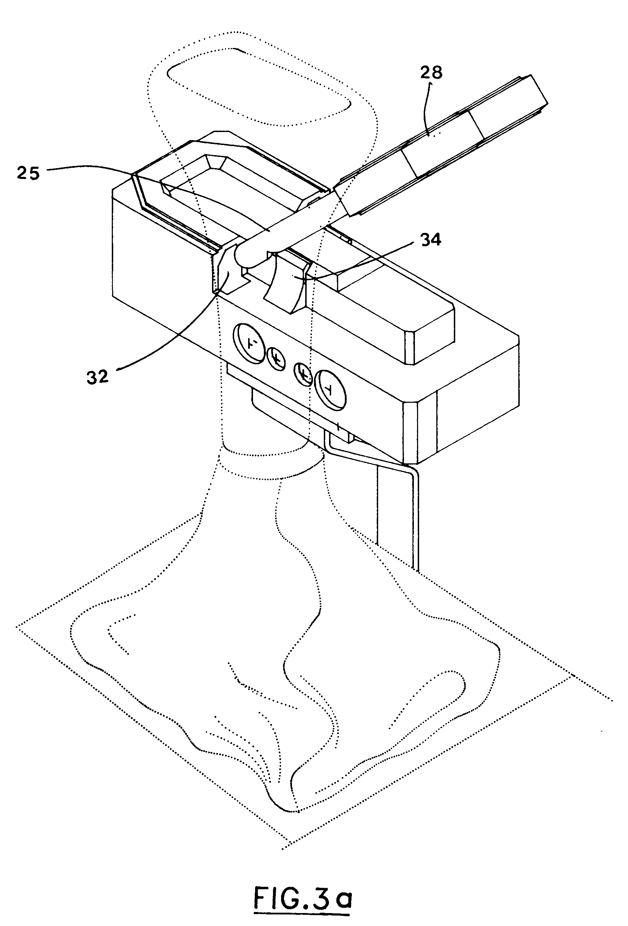

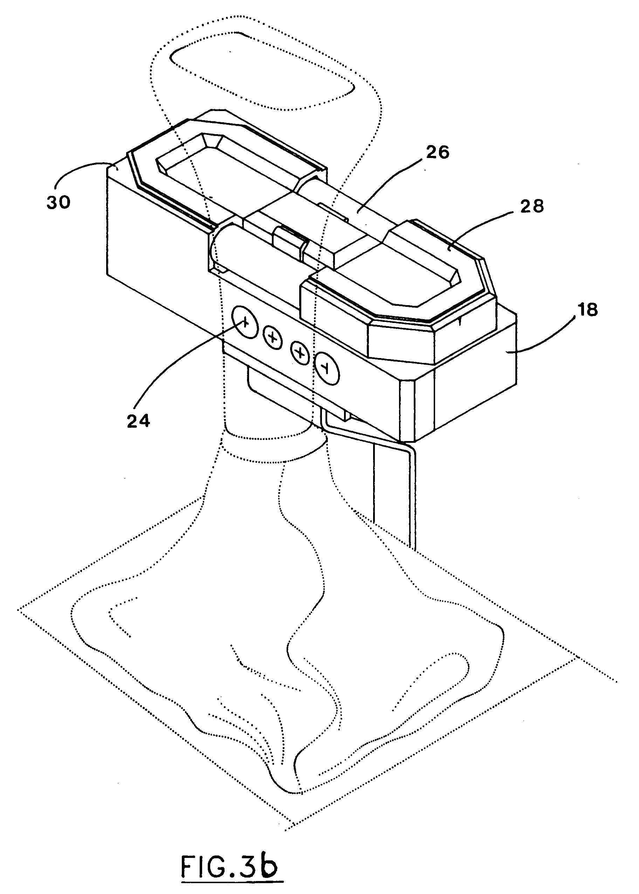

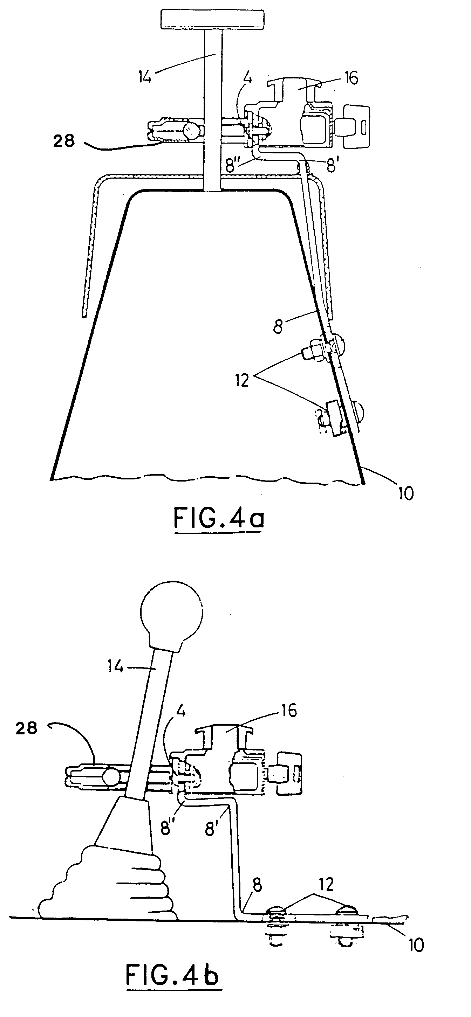

As shown in Figs. 1b, 4a and 4b, bracket 1, which has been bent at 8', 8'' before the nitrocarburizing in order to be adapted to the gear lever, is bent at 8 when being assembled, i.e. before the connection to the floor 10 of the car by means of anti-burglary bolts 12 screwed through holes 3 so that head 4 of the bracket is brought near gear lever 14 to support the padlock mechanism 16.
The padlock mechanism 16 comprises an essentially rectangular box-like body 18 housing in a cavity the padlock (not shown) aligned with the through-holes 24. The diameter of said through-holes corresponds to that of the ends 25 of the arms 26 of the bend 28 locking the gear lever in the operative position, as shown in Figs. 2, 4a and 4b. The bend 28 has two parallel arms 26 with ends 25 having less diameter and provided with notches 27 to be engaged by the padlock.
In order to arrange the bend in its rest position, the box-like body is provided at its upper side with a mount 30 having two openings 32 adapted to receive from the above the ends 25 of the arms 26 with an angle of inclination. Two tabs 34 standing from the upper side of said body are arranged parallel to and urged away from each other by a spring having an axis lying parallel to the plane of the two openings 32. The openings 32 have such a diameter as to be able to receive only the ends 25 of the arms 26. In this position the arms 26 abut against the openings 32 and the tabs 34 (fig. 3a). Once inserted the ends 25 into the openings 32 the driver rotates the bend 28 downward against the spring-loaded tabs 34 until the horizontal rest position of the bend is reached (Fig. 3b).

The present invention has been described and illustrated with reference to a preferred embodiment thereof, however, it is obvious that changes and/or modifications can be made by those skilled in the art without departing from the scope of the appended claims.

## Claims

1. An antitheft gear lever lock for cars, comprising a bracket (1) formed with an end section (2) provided with through-holes (3) for fastening bolts (12) and being able to be subjected to one or more bendings (8), said bracket (1) having further an elongated intermediate section (6) provided with one or more bendings (8', 8'') approaching the gear lever (14) and having a head section (4) provided with holes (5) for the connection to the antitheft padlock closure mechanism (16) which is supported by said bracket (1) and adapted to lock the gear lever (14) by a bend (28) embracing and retaining said gear lever (14) in the operative position, characterized in that the padlock closure mechanism (16) is provided at the upper side with a mount (30) having two openings (32) adapted to receive the two parallel ends (25) of the arms (26) of the bend (28) in a slanting attitude, said openings (32) being adjacent to spring-loaded tabs (34) standing up from the body of said padlock closure mechanism (16) so as to be parallel to and urged away from each other by said spring, the plane of such openings (32) being parallel to the axis of said spring loading the tabs (34), the diameter of said ends (25) being lower than the diameter of said arms (26), and the latter diameter of arms (26) larger than that of said openings (32), in order to be able to reach the rest position of the bend (28) by an easy rotation movement; said bracket (1) being forged by manganese steel under solubilized state having a Brinell hardness of approximately 220 kg/mm2.

2. The antitheft gear lever lock of claim 1, characterized in that both head section (4) and intermediate section (6) are hardened by surface nitrocarburizing after being bent (8',8'') to approach the gear lever (14).

## Patentansprüche

1. Antidiebstahl-Verriegelungsvorrichtung für den Schalthebel eines Kraftfahrzeugs mit einer Halterungseinrichtung (1), welche mit einem mit Durchgangslöchern (3) für Befestigungsschrauben (12) versehenen Endabschnitt (2) ausgebildet ist und einer oder mehreren Biegungen (8) aussetzbar ist, wobei die Halterungseinrichtung (1) weiterhin einen länglichen Mittelabschnitt (6) aufweist, welcher mit einer oder mehreren Biegungen (8', 8'') zur Annäherung an den Schalthebel (14) versehen ist und einen Kopfabschnitt (4) aufweist, der mit Löchern (5) zur Verbindung mit dem Antidiebstahl-Riegelklotz-Verschlußmechanismus (16) versehen ist, welcher durch die Halterungseinrichtung (1) gehaltert ist und zum Verriegeln des Schalthebels (14) durch einen Bogen (28), welcher den Schalthebel (14) in der Betriebsposition umschließt und festhält, dient, dadurch gekennzeichnet, daß der Riegelklotz-Verschlußmechanismus (16) an der Oberseite mit einer Anbringung (30) versehen ist, die zwei Öffnungen (32) zum Aufnehmen der zwei parallelen Enden (25) der Arme (26) des Bogens (28) in Schräglage aufweist, wobei die Öffnungen (32) neben federgespannten Verschlußriegeln (34) liegen, welche von dem Körper des Riegelklotz-Verschlußmechanismus (16) vorstehen, so daß sie durch die Feder parallel zueinander und voneinander weg gespannt sind, wobei die Ebene dieser Öffnungen (32) parallel zur Achse der Federspannung der Verschlußriegel (34) verläuft, wobei der Durchmesser der Enden (25) geringer als der Durchmesser der Arme (26) ist und wobei der letztere Durchmesser der Arme (26) größer als der der Öffnungen (32) ist, damit die Ruheposition des Bogens (28) durch eine leichte Drehbewegung erreichbar ist; wobei die Halterungseinrichtung (1) aus Manganstahl in gelösten Zustand mit einer Brinell-Härte von etwa 220 kg/mm² geschmiedet ist.

2. Antidiebstahl-Verriegelungsvorrichtung für den Schalthebel nach Anspruch 1, dadurch gekennzeichnet, daß sowohl der Kopfabschnitt (4) als auch der Mittelabschnitt (6) durch Oberflächen-Nitrokarburieren nach dem Verbiegen (8', 8'') zur Annäherung an den Schalthebel (14) gehärtet sind.

## Revendications

1. Blocage antivol de levier de vitesse destiné à des automobiles, comprenant un support (1) formé avec une section d'extrémité (2) pourvue de trous traversants (3) pour fixer des boulons (12) et qui peut être soumis à un ou plusieurs cintrages (8),ledit bras (1) présentant en outre une section intermédiaire allongée (6) pourvue d'un ou plusieurs cintrages (8', 8'') s'approchant du levier de vitesse (14) et comportant une section de tête (4) pourvue de trous (5) destinés à la liason avec le mécanisme antivol à fermeture par cadenas (16), lequel est supporté par ledit support (1) et est conçu pour bloquer le levier de vitesse (14) au moyen d'une partie courbe (28) embrassant et retenant ledit levier de vitesse (14) dans la position fonctionnelle, caractérisé en ce que le mécanisme de fermeture par cadenas (16) est pourvu au niveau du côté supérieur d'un support (30) comportant doux ouvertures (32) conçues pour recevoir les deux extrémités parallèles (25) des bras (26) du cintrage (28) en une position inclinée, les dites ouvertures (32) étant voisines de pattes chargées par ressort (34) en position verticale depuis le corps dudit mécanisme de fermeture à cadenas (16) de manière à être parallèles et éloignéen les unes des autres au moyen dudit ressort, le plan de ces ouvertures (32) étant parallèle à l'axe dudit ressort chargeant les pattes (34), le diamètre desdites extrémités (25) étant inférieur au diamètre desdits bras (26), et ce dernier diamètre de bras (26) étant plus important que celui desdites ouvertures (32), afin de pouvoir atteindre la position d'appui du cintrage (28) grâce à un mouvement de rotation facile; ledit support (1) étant forgé en acier au manganèse à l'état stabilisé ayant une dureté Brinell d'environ 220 kg/mm².

2. Blocage antivol de levier de vitesse selon la revendication 1, caractérisé en ce que les deux sections en tête (4) et la section intermédiaire (6) sont durcies par nitrocarburisation de surface après avoir été pliées (8', 8'') pour s'approcher du levier de vitesse (14).
